# EUROPEAN PATENT SPECIFICATION

(11) **EP 1 780 926 B1**
(45) Date of publication and mention of the grant of the patent: **20.01.2021**
(21) Application number: 05023668.6
(22) Date of filing: 28.10.2005
(51) Int. Cl.: H04L 1/16

(54) **Method for ACK/NACK signalling**
Verfahren zur ACK/NACK Signalisierung
Procédé de signalisation ACK/NACK

(43) Date of publication of application: 02.05.2007
(73) Proprietor: Nokia Technologies Oy, 02610 Espoo (FI)
(72) Inventor: Ball, Carsten, Dr., 81373 München (DE); Parolari, Sergio, 20133 Milano (IT)
(74) Representative: Nokia EPO representatives

(56) References cited:
- US-B1- 6 601 207
- US-B1- 6 772 215
- "Digital cellular telecommunications system (Phase 2+); General Packet Radio Service (GPRS); Mobile Station (MS) - Base Station System (BSS) interface; Radio Link Control/Medium Access Control (RLC/MAC) protocol (GSM 04.60 version 8.5.0 Release 1999); ETSI TS 101 349" ETSI STANDARDS, EUROPEAN TELECOMMUNICATIONS STANDARDS INSTITUTE, SOPHIA-ANTIPO, FR, vol. 3-G2;SMG2, no. V850, October 2000 (2000-10), XP014006157 ISSN: 0000-0001

## Description

The invention relates to a signalisation of so called "acknowledge, ack"-signals and of "not acknowledge, nack"-signals.

Such kind of ack/nack signalisation is known and described-for example - within GERAN Protocol GSM 04.60, specifically in ETSI TS 101 349, GSM 04.60 version 8.5.0 Release 1999, "Digital cellular telecommunications system (Phase 2+); General Packet Radio Service (GPRS); Mobile Station (MS) - Base Station System(BSS) interface; Radio Link Control/Medium Access Control (RLC/MAC) protocol".

Conventional reporting of ack/nack is inefficient due to the GERAN Protocol, leading to a significant overhead, to delay and to a reduced data-throughput.

At the moment feedback messages, such as the known "packet downlink ack/nack, PDAN" or the "packet uplink ack/nack, PUAN" contains bitmaps, which occupy a whole radio block. If there is a polling request sent in downlink direction, there has to be used quite a lot of uplink resources for the message PDAN. These uplink resources therefore can not be used longer for sending normal data or payload data.

Due to GERAN there is also a limited maximum polling frequency and there is a speed-limitation of the reporting procedure for ack/nack. Especially if there are mobile stations using 4 timeslots of a frame in downlink (DL) direction and only one timeslot per frame in uplink (UL) direction they might be severely hurt by frequently transmitted ack/nack messages, especially in case of concurrent temporary block flows (TBF).

Another problem is that because of GERAN there is a reduced reaction time of 180 ms for the retransmission of datas in case of a "nack".

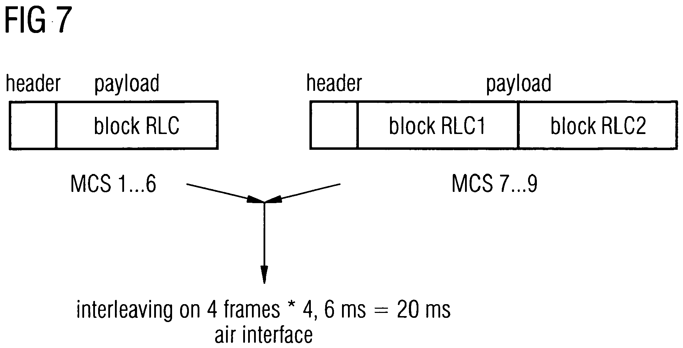

For a better understanding of the succeeding, FIG 7 shows radio blocks being used within a GERAN system - state of the art.

Within GERAN there are nine "modulation and coding schemes, MCS" - known as "MCS1", "MCS2", ..., "MCS9".

For MCS 1 to MCS 6 GERAN uses a data block with two fields, a first field as "header" and a second field as "payload" field, which is designated also as "block RLC". The header includes the "block sequence number, BSN" and also the "temporary flow identifier, TFI".

For MCS 7 to MCS 9 GERAN uses a data block with three fields, a first field as "header", a second field for "payload" known as "block RLC1" and a third field for "payload" known as "block RLC2". The header includes the "temporary flow identifier, TFI", a "first block sequence number, BSN1" assigned to the block RLC1 and a "second block sequence number, BSN2" assigned to the block RLC2.

The data of each data block are interleaved on timeslots of 4 frames, so the 4 frames show a duration of 20 ms.

It is the aim of the present invention, to implement an efficient and also fast method for ack/nack-reporting, especially suitable for GERAN, with a significant data-throughput rate and with a minimized time-latency.

This aim is solved by the features of claim 1. Advantageous details of the invention are described by the features of the succeeding claims.

Because of the inventive ack/nack reporting method, there is a minimum bandwidth consumption on the feedback channel.

A realization of a polling period up to 20ms is possible in GERAN, without significant performance degradation.

To overcome the problem stated above, the invention provides a method, system, and involved devices thereof. The invention is defined and limited by the scope of appended claims.

According to an embodiment of the invention, there is provided a method for ack/nack signalisation, wherein a data block comprises payload data, wherein the payload data is transmitted as one or more Radio Link Control blocks, wherein the payload data is interleaved and distributed on assigned timeslots, and the transmission uses at least one carrier to transmit the payload data from a first unit to a second unit, wherein the first unit transmits a polling request at a point of time to the second unit, and the polling request initialises an ack/nack examination of received Radio Link Control blocks at the second unit, wherein the second unit examines received Radio Link Control blocks for each of the assigned timeslots, wherein during the examination, a binary bit combination is used for each of the assigned timeslots to indicate if one Radio Link Control block or two Radio Link Control blocks of each of the assigned timeslots show errors or not, wherein the indicating binary bit combinations are used to form a bitmap, wherein the bitmap is transmitted from the second unit to the first unit as ack/nack signal, wherein the first unit analyses the bitmap and identifies erroneous Radio Link Control blocks wherein the analysing is performed using the transmission time of the Radio Link Control blocks between the first and the second unit, the assigned timeslots and the point of time when the polling request was sent.

According to a further embodiment of the invention there is provided a system for ack/nack signalisation, the system comprising a first unit and a second unit, wherein a data block comprises payload data, wherein the payload data is transmitted as one or more Radio Link Control blocks, wherein the payload data is interleaved and distributed on assigned timeslots, and the transmission uses at least one carrier to transmit the payload data from the first unit to the second unit, wherein the first unit is configured to transmit a polling request at a point of time to the second unit, and the polling request initialises an ack/nack examination of received Radio Link Control blocks at the second unit, wherein the second unit is configured to examine received Radio Link Control blocks for each of the assigned timeslots, wherein during the examination, a binary bit combination is used for each of the assigned timeslots to indicate if one Radio Link Control block or two Radio Link Control blocks of each of the assigned timeslots show errors or not, wherein the indicating binary bit combinations are used to form a bitmap, wherein the second unit is configured to transmit the bitmap from the second unit to the first unit as ack/nack signal, wherein the first unit is configured to analyse the bitmap and identifies erroneous Radio Link Control blocks wherein the analysing is performed using the transmission time of the Radio Link Control blocks between the first and the second unit, the assigned timeslots and the point of time when the polling request was sent.

According to a further embodiment of the invention there is provided an apparatus for ack/nack signalisation, wherein a data block comprises payload data, wherein the payload data is transmitted from a first unit as one or more Radio Link Control blocks, wherein the payload data is interleaved and distributed on assigned timeslots, and the apparatus uses at least one carrier to receive the payload data from the first unit, wherein the apparatus is configured to receive, from the first unit, a polling request at a point of time, and the polling request initialises an ack/nack examination of received Radio Link Control blocks at the apparatus, wherein the apparatus is configured to examine received Radio Link Control blocks for each of the assigned timeslots, wherein during the examination, a binary bit combination is used for each of the assigned timeslots to indicate if one Radio Link Control block or two Radio Link Control blocks of each of the assigned timeslots show errors or not, wherein the indicating binary bit combinations are used to form a bitmap, wherein the apparatus is configured to transmit the bitmap from the apparatus to the first unit as ack/nack signal, wherein the first unit is configured to analyse the bitmap and identifies erroneous Radio Link Control blocks wherein the analysing is performed using the transmission time of the Radio Link Control blocks between the first unit and the apparatus, the assigned timeslots and the point of time when the polling request was sent.

The bitmap may be transmitted from the second unit to the first unit as part of an access burst.

The bitmap may be transmitted from the second unit to the first unit as part of a Radio Link Control data block together with payload data of the second unit.

A number of bitmaps may be sent together as single transmission to the first unit.

The payload data may be assigned to either one Radio Link Control block or to two Radio Link Control blocks depending on which modulation and coding scheme is used.

A binary bit combination for the pair of bits of "00" may be set to indicate that decoding of a header of the data block has failed, or there binary bit combination for the pair of bits may be set to "00" to indicate that the header was correctly received but the decoding of the payload of the one or two Radio Link Control blocks failed.

If the access burst carries the short bitmap then battery power at the mobile station can be saved. Because of the slower transmission repetition of the access burst it is possible to reduce interference within the system / GERAN system.

It is also still possible to use conventional and well known PDAN- and PUAN-method of signalisation parallel together with the invention, because the implementation of the inventive method especially in GERAN is very easy.

The inventive method can be used in uplink and/or in downlink direction.

The inventive method does not need to transmit block sequence numbers as part of the ack/nack signal. Instead of assignments of ack/nack with block sequence number, there is an assignment by time, for example at a base station. The base station knows the transmission time and the timing of a dedicated radio block exactly, so an assignment of a received ack/nack signal to a former sent radio block is possible.

For example, if a polling indication is received at a frame number "x", the mobile station would send back a short bitmap for ack/nack, indicating the status of all received radio blocks in assigned timeslots during frame number "x", "x-1", and so on. This is depending on the size of the short bitmap and of the number of assigned timeslots.

In most cases a very short bitmap is sufficient for ack/nack signalling. If we assume a mobile station with 4 assigned timeslots in downlink direction and a polling period of 40 ms, there will be a maximum of 4x2 = 8 radio blocks carrying a maximum of 16 "radio link control, RLC" blocks - submitted during two successive polling.

As the network (and the mobile station too) knows the block sequence number (BSN) of corresponding RLC blocks when receiving the short bitmap the correct information can be assigned or derived.

In the succeeding part, the invention will be described by means of a drawing. It is shown with help of:
- FIG 1: the inventive method for ack/nack signalling between a first device and a second device,
- FIG 2A: bit combinations being used for the generation of a short bitmap in respect to the inventive method,
- FIG 2B: in respect to FIG 1 and FIG 2 the generation of a short bitmap for the inventive method
- FIG 3: an example for a new RLC data block in uplink direction of a GERAN-system in respect to the inventive method,
- FIG 4: an example for "incremental redundancy", if the inventive method is used within a system,
- FIG 5: fields of modified EGPRS downlink RLC data block headers,
- FIG 6: three tables in respect to FIG 5, and
- FIG 7: two radio blocks used within a GERAN system - state of the art.

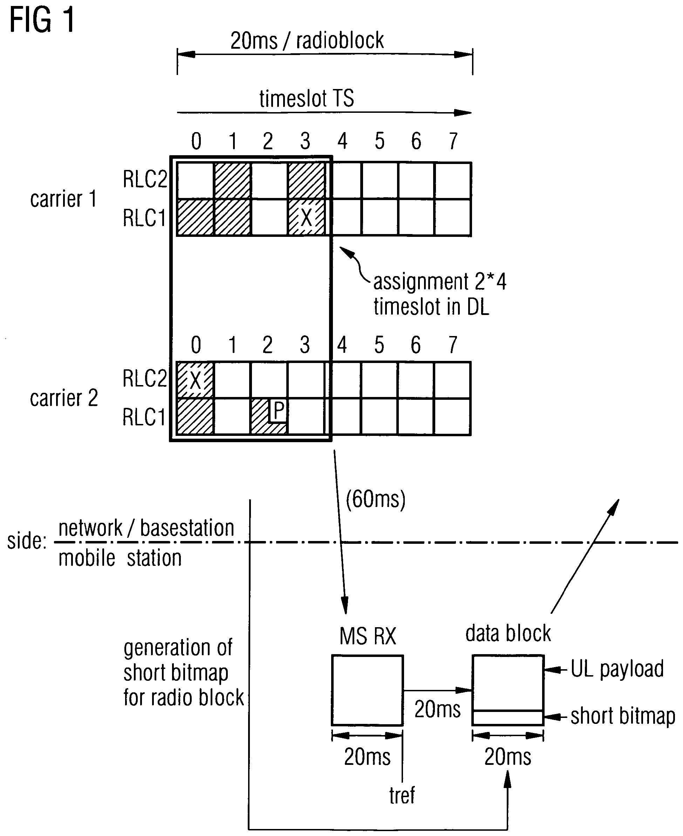

FIG 1 shows the inventive method for ack/nack signalling between a base station or network as first device and a mobile station as second device.

Referring to FIG 7 we assume, that payload data of a data block is assigned to the two data blocks RLC1 and RLC2.

We further assume that two carrier of a multicarrier-communication-system are used to transmit data. These carriers are named as carrier 1 and carrier 2.

We further assume that the payload will be transmitted with timeslots TS of four succeeding frames, the four frames show a duration of 20ms. There is an assignment of four timeslots of carrier 1 and of carrier 2 for payload transmission, so there are 2*4 timeslots TS in downlink direction DL.

In respect to carrier 1 the timeslots TS of the four frames with the assigned numbers "0", "1" and "3" will be used for payload transmission of RLC1 and the timeslots TS with the assigned numbers "1" and "3" will be used for payload transmission of RLC2.

In respect to carrier 2 the timeslots TS with numbers "0" and "2" will be used for payload transmission of RLC1 and the timeslot TS with number 0 will be used for payload transmission of RLC2.

In the succeeding the assigned numbered timeslots will be named as TS0, TS1,..., TS7.

The whole 20 ms radio block (4 frames) will be transmitted from the first unit to the second unit. For example at GERAN the radio block will be received 60ms later as block MSRX at the second unit or mobile station.

We assume that in respect to carrier 1 the block RLC1 of timeslot TS3 was transmitted and/or received with errors. This is marked with the label "X".

In respect to carrier 2 the block RLC2 of timeslot TS0 was transmitted and/or received with errors. This is marked with the label "X".

We assume further that in respect to carrier 2 the block RLC1 of timeslot TS2 comprises a "polling request" within a polling field. This is marked with the label "P".

Because of the polling request a generation of a so called "short bitmap" for ack/nack for the radio block / transmitted payload is initiated.

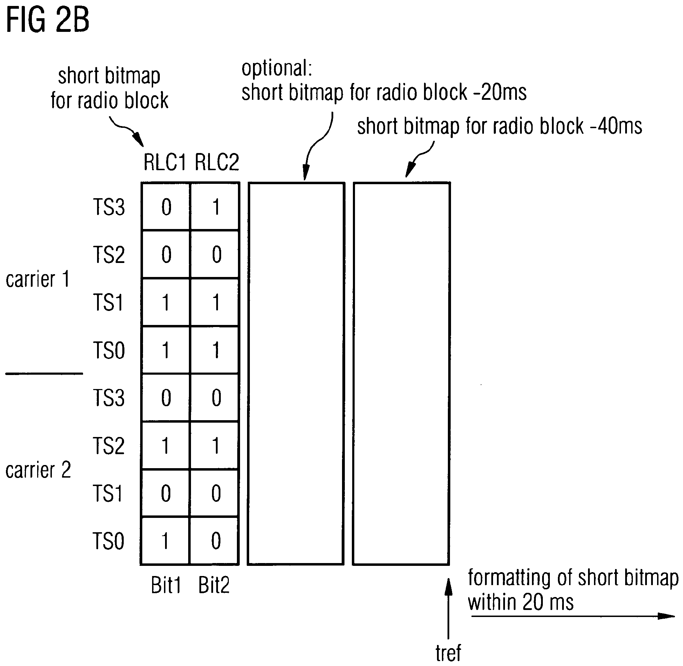

The generation of the short bitmap will be described later within FIG 2B in more detail.

The short bitmap will be transmitted 20 ms later as part of a normal data block in uplink direction to inform the first unit about the ack/nack.

This normal data block last 20 ms and carries also payload data, which has to be transmitted from the second unit to the first unit.

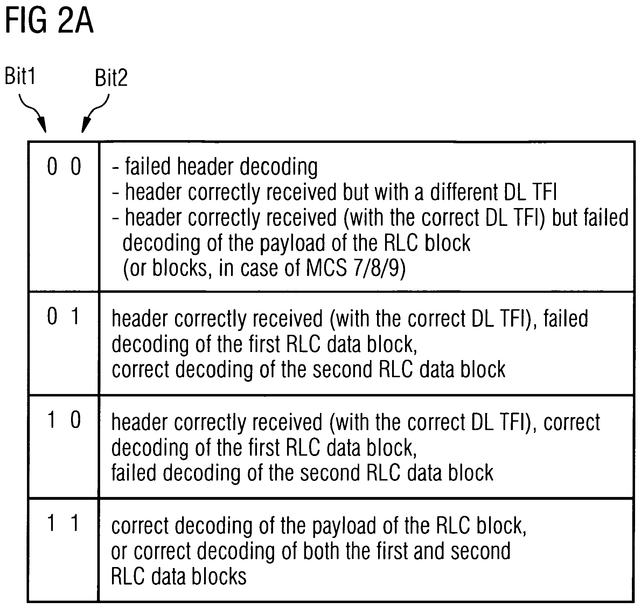

FIG 2A shows bit combinations being used for the generation of the short bitmap in respect to the inventive method.

Because of the two blocks RLC1 and RLC2 we will need two bits Bit1, Bit2 per radio block for generation / creation of the short bitmap.

For every radio block received in the assigned timeslots, a receiver of the second unit shall set the pair of bits in the short bitmap in the following way, shown in FIG 2A.

In case of multiple temporary bit flow TBF the same bitmap could carry the information for all of the TBF. In this case bits would be set to 1 for RLC blocks correctly received with any of the assigned downlink TFI. This would further optimize the procedure since feedback for all of the TBF could be provided at the same time.

FIG 2B shows in respect to FIG 1 and FIG 2 the generation of a short bitmap according to the inventive method.

The assignment of used timeslots is known at first unit and also at the second unit. Therefore we can use a chart with two columns and with eight lines to create the short bitmap.

A first column refers to RLC1, a second column refers to RLC2, the lines refer to the timeslots TS0,..., TS3 of carrier 1 and of carrier 2.

Referring to carrier 1, upper part of the chart:
Timeslot TS3 carry RLC1 and RLC2 of an assigned user. But block RLC1 was received with errors. Therefore we have to choose bit combination "01" for timeslot TS3 according to FIG 2A.

Timeslot TS2 does not carry payload data of the user. Therefore we have to choose bit combination "00" for TS2.

Timeslot TS1 carry block RLC1 and RLC2, both received without errors. Therefore we have to choose bit combination "11" for timeslot TS1.

Timeslot TS0 carry only block RLC1, received without errors. Therefore we have to choose bit combination "11" for timeslot TS0.

Referring to carrier 2, lower part of the chart:
Timeslot TS3 do not carry payload data of the user. Therefore we have to choose bit combination "00" for TS3.

Timeslot TS2 carry only block RLC1, received without errors. Therefore we have to choose bit combination "11" for timeslot TS2.

Timeslot TS1 do not carry payload data of the user. Therefore we have to choose bit combination "00" for TS3.

Timeslot TS0 carry block RLC1 and RLC2 of the assigned user. But block RLC2 was received with errors. Therefore we have to choose bit combination "10" for timeslot TS0 according to FIG 2A.

According to the invention it is possible to create also short bitmap of frames, being transmitted earlier than the currently described frame. These frames are marked as "radio block - 20ms" and also as "radio block -40ms". Within the time tref, which indicates the end of the block "MS RX" (look at FIG 1), it is possible to create two another short bitmaps.

If there is enough capacity within the data block, the three short bitmap will be transmitted to the first unit.

But referring to the example above, the short bitmap of the one radio block will be sent to the first unit in uplink direction.

The first unit knows exactly the time of sending of the polling request (marked with the label "P"), the timing within the system and the assignment of timeslots also.

Therefore it is possible that first unit analyses the received short bitmap in respect with the timing and in respect with the assigned timeslots to find out erroneous blocks RLC.

Because of this knowledge and based on the short bitmap it is not longer necessary to transmit extensive, large bitmaps used right now at the PDAN- PUAN-signalisation.

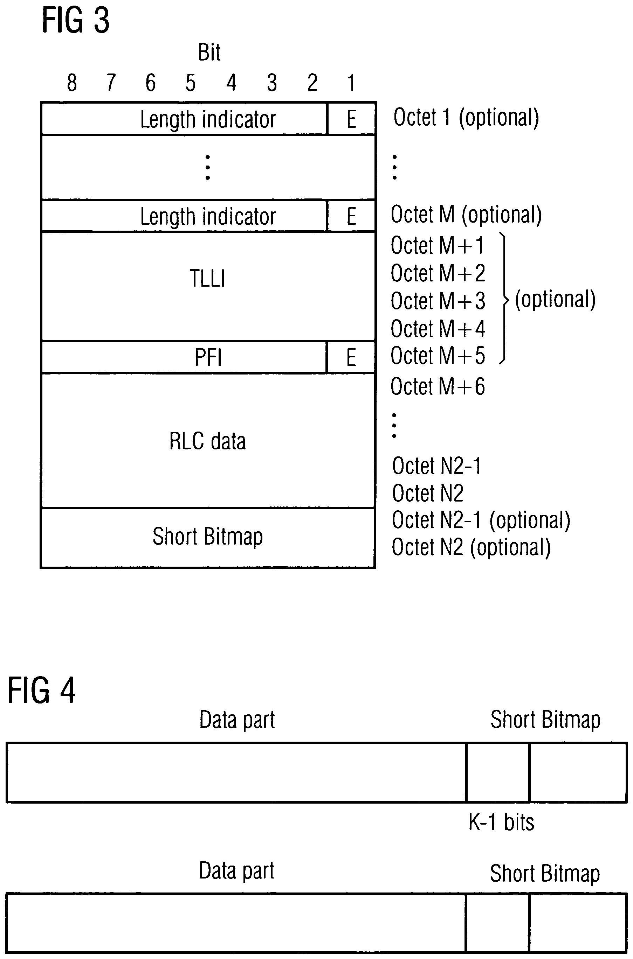

FIG 3 shows an example for a new RLC data block for transmission in uplink direction within GERAN.

The RLC data block refers to a first downlink temporary bit flow TBF1 allocated on timeslots 0, 1, 2 and 3.
This temporary bit flow TBF1 is multiplexed with other temporary bit flow TBF2 and TBF3.
The length of the short bitmap is assumed to be of 2 octets.

FIG 4 shows an example for "incremental redundancy", if the inventive method is used within a communication system.

The insertion of the short bitmap within a uplink radio block depends on the presence of a polling indication or polling request in a previous corresponding downlink radio block.

There will be a bit indicator, reusing one of the spare bits in the uplink RLC data block header, to indicate that the last 2 octets of the transmitted payload in uplink direction contains a short bitmap - referring to FIG 3.

But the corresponding 2 octets are not allowed be used in case of a "soft decoding" at the first unit. The soft decoding shall be applied only to the "real" RLC data part (which remains the same for all retransmission). For the last 2 octets only the last retransmission shall be used always.

If the uplink RLC data block has to be retransmitted, a different short bitmap will be included anyway - independently of a polling request from the network / base station.

In case of repetitions, the bits from the data part can be soft combined - e.g. for EDGE incremental redundancy purposes. Bits of the short bitmap should not be softly combined, only the bits of the last retransmission are used.

There is an alternative transmission of the short bitmap, using an access burst. As soon as the mobile station has no additional data payload to submit in uplink direction (for example during the "Extended Uplink TBF Phase), the mobile station could use an access burst to carry the short bitmap.

This results in saving of mobile station battery and in reduced uplink interference within the network, because only 1 out of 4 bursts of a radio block might be used.

This allows also a more efficient scheduling of several mobile stations on a dedicated timeslot, if the mobile stations use different bursts.

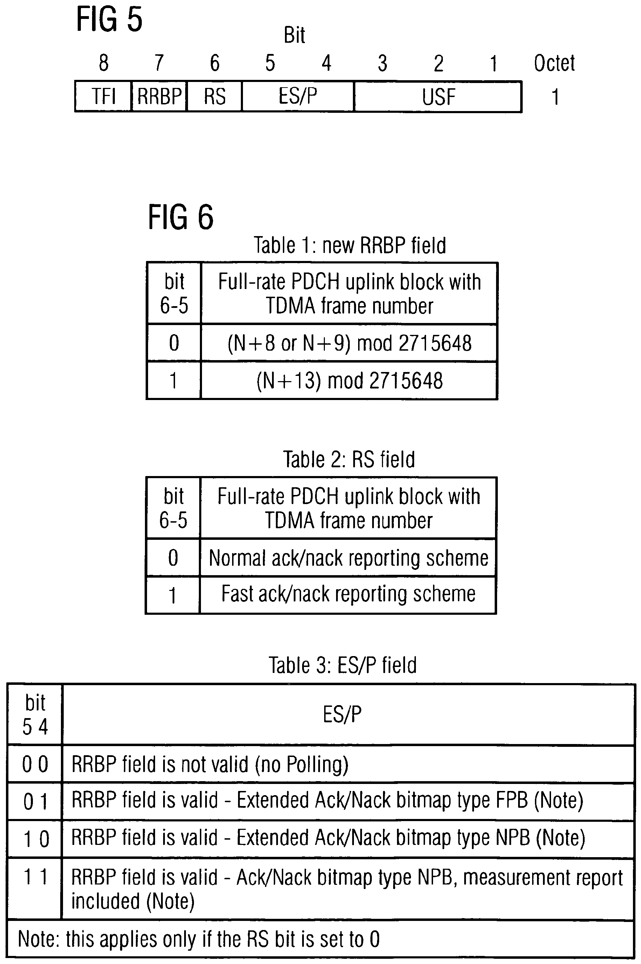

FIG 5 shows fields of modified EGPRS downlink RLC data block headers.

The new ack/nack reporting method might have to coexist with the ack/nack reporting used right now according to the state of the art.

This can be achieved by a redefinition of the known "relative reserved bit period, RRBP"-field and of the "extended supplementary polling field, ES/P"-field in the header of EGPRS downlink data blocks.

The RRBP field could be split into 2 new fields: a new RRBP field (defining only two possible values: 20 and 40 ms reaction time) and a new "RS"-field defining the reporting scheme.

Therefore the network is able to request the conventional ack/nack message from the mobile station including "stating sequence number, SSN" and a long bitmap, if necessary. As example, whenever some successive polling requests do not arrive at the mobile station or whenever polling responses are not received at the network.

It would be also a proper enhancement, if the mobile station could send a conventional bitmap by its own, if a space in the short bitmap is not sufficient - for example if several polling requests got lost on the Um interface.

FIG 6 shows a table of the new RRBP-field, of the RS- field and of the ES/P-field in respect to FIG 5.

## Claims

1. Method for ack/nack signalisation,
- wherein a data block comprises payload data, wherein the payload data is transmitted as one or more Radio Link Control blocks, wherein the payload data is interleaved and distributed on assigned timeslots, and the transmission uses at least one carrier to transmit the payload data from a first unit to a second unit,
- wherein the first unit transmits a polling request at a point of time to the second unit, and the polling request initialises an ack/nack examination of received Radio Link Control blocks at the second unit,
- wherein the second unit examines received Radio Link Control blocks for each of the assigned timeslots,
- wherein during the examination, a binary bit combination is used for each of the assigned timeslots to indicate if one Radio Link Control block or two Radio Link Control blocks of each of the assigned timeslots show errors or not,
- wherein the indicating binary bit combinations are used to form a bitmap,
- wherein the bitmap is transmitted from the second unit to the first unit as ack/nack signal,
- wherein the first unit analyses the bitmap and identifies erroneous Radio Link Control blocks wherein the analysing is performed using the transmission time of the Radio Link Control blocks between the first and the second unit, the assigned timeslots and the point of time when the polling request was sent.

2. A method according to claim 1, wherein the bitmap is transmitted from the second unit to the first unit as part of an access burst.

3. A method according to claim 1, wherein the bitmap is transmitted from the second unit to the first unit as part of a Radio Link Control data block together with payload data of the second unit.

4. A method according to claim 1, wherein a number of bitmaps are sent together as single transmission to the first unit.

5. A method according to any of claims 1 to 4, wherein the payload data is assigned to either one Radio Link Control block or to two Radio Link Control blocks depending on which modulation and coding scheme is used.

6. A method according to claim 5,
- wherein a binary bit combination of "00" is set to indicate that decoding of a header of the data block has failed, or
- wherein the binary bit combination for the pair of bits is set to "00" to indicate that the header was correctly received but the decoding of the payload of the one or two Radio Link Control blocks failed.

7. A method according to claim 5, wherein the payload data is assigned to two Radio Link Control blocks,
- wherein a binary bit combination of "01" is set to indicate, that a header of the data block was received correctly, and
- to indicate that the decoding of the first Radio Link Control block failed, and
- to indicate that the decoding of a second Radio Link Control block was correct.

8. A method according to claim 5, wherein the payload data is assigned to two Radio Link Control blocks,
- wherein a binary bit combination of "10" is set to indicate, that a header of the data block was received correctly, and
- to indicate that the decoding of the first Radio Link Control block was correct, and
- to indicate that the decoding of the second Radio Link Control block failed.

9. A method according to claim 5, wherein the payload data is assigned to two Radio Link Control blocks,
- wherein a binary bit combination of "11" is set to indicate, that a header of the data block was received correctly, and
- to indicate that the decoding of the first Radio Link Control block was correct, and
- to indicate that the decoding of the second Radio Link Control block was correct.

10. A system for ack/nack signalisation, the system comprising a first unit and a second unit,
- wherein a data block comprises payload data, wherein the payload data is transmitted as one or more Radio Link Control blocks, wherein the payload data is interleaved and distributed on assigned timeslots, and the transmission uses at least one carrier to transmit the payload data from the first unit to the second unit,
- wherein the first unit is configured to transmit a polling request at a point of time to the second unit, and the polling request initialises an ack/nack examination of received Radio Link Control blocks at the second unit,
- wherein the second unit is configured to examine received Radio Link Control blocks for each of the assigned timeslots,
- wherein during the examination, a binary bit combination is used for each of the assigned timeslots to indicate if one Radio Link Control block or two Radio Link Control blocks of each of the assigned timeslots show errors or not,
- wherein the indicating binary bit combinations are used to form a bitmap,
- wherein the second unit is configured to transmit the bitmap from the second unit to the first unit as ack/nack signal,
- wherein the first unit is configured to analyse the bitmap and identifies erroneous Radio Link Control blocks wherein the analysing is performed using the transmission time of the Radio Link Control blocks between the first and the second unit, the assigned timeslots and the point of time when the polling request was sent.

11. An apparatus for ack/nack signalisation,
- wherein a data block comprises payload data, wherein the payload data is transmitted from a first unit as one or more Radio Link Control blocks, wherein the payload data is interleaved and distributed on assigned timeslots, and the apparatus uses at least one carrier to receive the payload data from the first unit,
- wherein the apparatus is configured to receive, from the first unit, a polling request at a point of time, and the polling request initialises an ack/nack examination of received Radio Link Control blocks at the apparatus,
- wherein the apparatus is configured to examine received Radio Link Control blocks for each of the assigned timeslots,
- wherein during the examination, a binary bit combination is used for each of the assigned timeslots to indicate if one Radio Link Control block or two Radio Link Control blocks of each of the assigned timeslots show errors or not,
- wherein the indicating binary bit combinations are used to form a bitmap,
- wherein the apparatus is configured to transmit the bitmap from the apparatus to the first unit as ack/nack signal,
- wherein the apparatus is specifically adapted to cooperate with the first unit,
- wherein the first unit is configured to analyse the bitmap and identifies erroneous Radio Link Control blocks wherein the analysing is performed using the transmission time of the Radio Link Control blocks between the first unit and the apparatus, the assigned timeslots and the point of time when the polling request was sent.

## Patentansprüche

1. Verfahren für eine ACK/NACK-Signalisierung,
- wobei ein Datenblock Nutzlastdaten umfasst, wobei die Nutzlastdaten als ein oder mehrere Funkverbindungssteuerblöcke übertragen werden, wobei die Nutzlastdaten verschachtelt und in zugewiesene Zeitschlitze verteilt sind und die Übertragung zum Übertragen der Nutzlastdaten von einer ersten Einheit zu einer zweiten Einheit mindestens einen Träger verwendet,
- wobei die erste Einheit eine Abfrageanforderung zu einem Zeitpunkt zur zweiten Einheit überträgt und die Abfrageanforderung eine ACK/NACK-Untersuchung von empfangenen Funkverbindungssteuerblöcken an der zweiten Einheit initialisiert,
- wobei die zweite Einheit empfangene Funkverbindungssteuerblöcke für jeden der zugewiesenen Zeitschlitze untersucht,
- wobei während der Untersuchung für jeden der zugewiesenen Zeitschlitze eine binäre Bitkombination verwendet wird, um anzuzeigen, ob ein Funkverbindungssteuerblock oder zwei Funkverbindungssteuerblöcke von jedem der zugewiesenen Zeitschlitze Fehler zeigen oder nicht,
- wobei die anzeigenden binären Bitkombinationen verwendet werden, um ein Bitmap zu bilden,
- wobei das Bitmap als ein ACK/NACK-Signal von der zweiten Einheit zur ersten Einheit übertragen wird,
- wobei die erste Einheit das Bitmap analysiert und fehlerhafte Funkverbindungssteuerblöcke identifiziert, wobei das Analysieren unter Verwendung der Übertragungszeit der Funkverbindungssteuerblöcke zwischen der ersten und der zweiten Einheit, der zugewiesenen Zeitschlitze und des Zeitpunkts, zu dem die Abfrageanforderung gesendet wurde, durchgeführt wird.

2. Verfahren nach Anspruch 1, wobei das Bitmap als Teil eines Zugriffsbursts von der zweiten Einheit zur ersten Einheit übertragen wird.

3. Verfahren nach Anspruch 1, wobei das Bitmap als Teil eines Funkverbindungssteuerdatenblocks zusammen mit Nutzlastdaten der zweiten Einheit von der zweiten Einheit zur ersten Einheit übertragen wird.

4. Verfahren nach Anspruch 1, wobei eine Anzahl von Bitmaps zusammen als einzelne Übertragung an die erste Einheit gesendet werden.

5. Verfahren nach einem der Ansprüche 1 bis 4, wobei die Nutzlastdaten in Abhängigkeit davon, welches Modulations- und Codierschema verwendet wird, entweder einem Funkverbindungssteuerblock oder zwei Funkverbindungssteuerblöcken zugewiesen werden.

6. Verfahren nach Anspruch 5,
- wobei die binäre Bitkombination "00" eingestellt ist, um anzuzeigen, dass eine Decodierung eines Headers des Datenblocks fehlgeschlagen ist, oder
- wobei die binäre Bitkombination für das Bitpaar auf "00" eingestellt ist, um anzuzeigen, dass der Header korrekt empfangen wurde, die Decodierung der Nutzlast des einen oder der zwei Funkverbindungssteuerblöcke aber fehlgeschlagen ist.

7. Verfahren nach Anspruch 5, wobei die Nutzlastdaten zwei Funkverbindungssteuerblöcken zugewiesen werden,
- wobei die binäre Bitkombination auf "01" eingestellt ist, um anzuzeigen, dass ein Header des Datenblocks korrekt empfangen wurde, und
- um anzuzeigen, dass die Decodierung des ersten Funkverbindungssteuerblocks fehlgeschlagen ist, und
- um anzuzeigen, dass die Decodierung eines ersten Funkverbindungssteuerblocks korrekt war.

8. Verfahren nach Anspruch 5, wobei die Nutzlastdaten zwei Funkverbindungssteuerblöcken zugewiesen werden,
- wobei die binäre Bitkombination auf "10" eingestellt ist, um anzuzeigen, dass ein Header des Datenblocks korrekt empfangen wurde, und
- um anzuzeigen, dass die Decodierung des ersten Funkverbindungssteuerblocks korrekt war, und
- um anzuzeigen, dass die Decodierung des zweiten Funkverbindungssteuerblocks fehlgeschlagen ist.

9. Verfahren nach Anspruch 5, wobei die Nutzlastdaten zwei Funkverbindungssteuerblöcken zugewiesen werden,
- wobei die binäre Bitkombination auf "11" eingestellt ist, um anzuzeigen, dass ein Header des Datenblocks korrekt empfangen wurde, und
- um anzuzeigen, dass die Decodierung des ersten Funkverbindungssteuerblocks korrekt war, und
- um anzuzeigen, dass die Decodierung des zweiten Funkverbindungssteuerblocks korrekt war.

10. System für eine ACK/NACK-Signalisierung, wobei das System eine erste Einheit und eine zweite Einheit umfasst,
- wobei ein Datenblock Nutzlastdaten umfasst, wobei die Nutzlastdaten als ein oder mehrere Funkverbindungssteuerblöcke übertragen werden, wobei die Nutzlastdaten verschachtelt und in zugewiesene Zeitschlitze verteilt sind und die Übertragung zum Übertragen der Nutzlastdaten von der ersten Einheit zur zweiten Einheit mindestens einen Träger verwendet,
- wobei die erste Einheit dazu ausgelegt ist, eine Abfrageanforderung zu einem Zeitpunkt zur zweiten Einheit zu übertragen, und die Abfrageanforderung eine ACK/NACK-Untersuchung von empfangenen Funkverbindungssteuerblöcken an der zweiten Einheit initialisiert,
- wobei die zweite Einheit dazu ausgelegt ist, empfangene Funkverbindungssteuerblöcke für jeden der zugewiesenen Zeitschlitze zu untersuchen,
- wobei während der Untersuchung für jeden der zugewiesenen Zeitschlitze eine binäre Bitkombination verwendet wird, um anzuzeigen, ob ein Funkverbindungssteuerblock oder zwei Funkverbindungssteuerblöcke von jedem der zugewiesenen Zeitschlitze Fehler zeigen oder nicht,
- wobei die anzeigenden binären Bitkombinationen verwendet werden, um ein Bitmap zu bilden,
- wobei die zweite Einheit dazu ausgelegt ist, das Bitmap als ein ACK/NACK-Signal von der zweiten Einheit zur ersten Einheit zu übertragen,
- wobei die erste Einheit dazu ausgelegt ist, das Bitmap zu analysieren und fehlerhafte Funkverbindungssteuerblöcke zu identifizieren, wobei das Analysieren unter Verwendung der Übertragungszeit der Funkverbindungssteuerblöcke zwischen der ersten und der zweiten Einheit, der zugewiesenen Zeitschlitze und des Zeitpunkts, zu dem die Abfrageanforderung gesendet wurde, durchgeführt wird.

11. Vorrichtung für eine ACK/NACK-Signalisierung,
- wobei ein Datenblock Nutzlastdaten umfasst, wobei die Nutzlastdaten von einer ersten Einheit als ein oder mehrere Funkverbindungssteuerblöcke übertragen werden, wobei die Nutzlastdaten verschachtelt und in zugewiesene Zeitschlitze verteilt sind und die Vorrichtung mindestens einen Träger verwendet, um die Nutzlastdaten von der ersten Einheit zu empfangen,
- wobei die Vorrichtung dazu ausgelegt ist, eine Abfrageanforderung zu einem Zeitpunkt von der ersten Einheit zu empfangen, und die Abfrageanforderung eine ACK/NACK-Untersuchung von empfangenen Funkverbindungssteuerblöcken an der Vorrichtung initialisiert,
- wobei die Vorrichtung dazu ausgelegt ist, empfangene Funkverbindungssteuerblöcke für jeden der zugewiesenen Zeitschlitze zu untersuchen,
- wobei während der Untersuchung für jeden der zugewiesenen Zeitschlitze eine binäre Bitkombination verwendet wird, um anzuzeigen, ob ein Funkverbindungssteuerblock oder zwei Funkverbindungssteuerblöcke von jedem der zugewiesenen Zeitschlitze Fehler zeigen oder nicht,
- wobei die anzeigenden binären Bitkombinationen verwendet werden, um ein Bitmap zu bilden,
- wobei die Vorrichtung dazu ausgelegt ist, das Bitmap als ein ACK/NACK-Signal von der Vorrichtung zur ersten Einheit zu übertragen,
- wobei die Vorrichtung speziell angepasst ist, mit der ersten Einheit zusammenzuwirken,
- wobei die erste Einheit dazu ausgelegt ist, das Bitmap zu analysieren und fehlerhafte Funkverbindungssteuerblöcke zu identifizieren, wobei das Analysieren unter Verwendung der Übertragungszeit der Funkverbindungssteuerblöcke zwischen der ersten Einheit und der Vorrichtung, der zugewiesenen Zeitschlitze und des Zeitpunkts, zu dem die Abfrageanforderung gesendet wurde, durchgeführt wird.

## Revendications

1. Procédé de signalisation ack/nack (accusé de réception/ accusé de réception négatif),
- dans lequel un bloc de données comprend des données de charge utile, dans lequel les données de charge utile sont transmises sous forme d'un ou plusieurs blocs de contrôle de liaison radio, dans lequel les données de charge utile sont entrelacées et réparties sur des créneaux temporels attribués, et la transmission utilise au moins une porteuse pour transmettre les données de charge utile d'une première unité à une seconde unité,
- dans lequel la première unité transmet une demande d'interrogation à un moment donné à la seconde unité, et la demande d'interrogation initialise un examen ack/nack de blocs de contrôle de liaison radio reçus par la seconde unité,
- dans lequel la seconde unité examine des blocs de contrôle de liaison radio reçus pour chacun des créneaux temporels attribués,
- dans lequel, pendant l'examen, une combinaison binaire de bits est utilisée pour chacun des créneaux temporels attribués pour indiquer si un bloc de contrôle de liaison radio ou deux blocs de contrôle de liaison radio de chacun des créneaux temporels attribués présentent ou non des erreurs,
- dans lequel les combinaisons binaires de bits d'indication sont utilisées pour former une carte de bits,
- dans lequel la carte de bits est transmise de la seconde unité à la première unité sous forme de signal ack/nack,
- dans lequel la première unité analyse la carte de bits et identifie des blocs de contrôle de liaison radio erronés, dans lequel l'analyse est réalisée en utilisant le temps de transmission des blocs de contrôle de liaison radio entre la première et la seconde unité, les créneaux temporels attribués et le moment où la demande d'interrogation été envoyée.

2. Procédé selon la revendication 1, dans lequel la carte de bits est transmise de la seconde unité à la première unité dans le cadre d'une rafale d'accès.

3. Procédé selon la revendication 1, dans lequel la carte de bits est transmise de la seconde unité à la première unité dans le cadre d'un bloc de données de contrôle de liaison radio avec les données de charge utile de la seconde unité.

4. Procédé selon la revendication 1, dans lequel un certain nombre de cartes de bits sont envoyées ensemble sous forme d'une transmission unique à la première unité.

5. Procédé selon l'une des revendications 1 à 4, dans lequel les données de charge utile sont attribuées soit à un bloc de contrôle de liaison radio soit à deux blocs de contrôle de liaison radio, en fonction du schéma de modulation et de codage utilisé.

6. Procédé selon la revendication 5,
- dans lequel une combinaison binaire de bits de "00" est fixée pour indiquer que le décodage d'un en-tête du bloc de données a échoué, ou
- dans lequel la combinaison binaire de bits pour la paire de bits est fixée à "00" pour indiquer que l'en-tête a été correctement reçu mais que le décodage de la charge utile des un ou deux blocs de contrôle de liaison radio a échoué.

7. Procédé selon la revendication 5, dans lequel les données de charge utile sont attribuées à deux blocs de contrôle de liaison radio,
- dans lequel une combinaison binaire de bits de "01" est fixée pour indiquer, qu'un en-tête du bloc de données a été reçu correctement, et
- pour indiquer que le décodage du premier bloc de contrôle de liaison radio a échoué, et
- pour indiquer que le décodage d'un second bloc de contrôle de liaison radio était correct.

8. Procédé selon la revendication 5, dans lequel les données de charge utile sont attribuées à deux blocs de contrôle de liaison radio,
- dans lequel une combinaison binaire de bits de "10" est fixée pour indiquer, qu'un en-tête du bloc de données a été reçu correctement, et
- pour indiquer que le décodage du premier bloc de contrôle de liaison radio était correct, et
- pour indiquer que le décodage du second bloc de contrôle de liaison radio a échoué.

9. Procédé selon la revendication 5, dans lequel les données de charge utile sont attribuées à deux blocs de contrôle de liaison radio,
- dans lequel une combinaison binaire de bits de "11" est fixée pour indiquer qu'un en-tête du bloc de données a été reçu correctement, et
- pour indiquer que le décodage du premier bloc de contrôle de liaison radio était correct, et
- pour indiquer que le décodage du second bloc de contrôle de liaison radio était correct.

10. Système de signalisation ack/nack, le système comprenant une première unité et une seconde unité,
- dans lequel un bloc de données comprend des données de charge utile, dans lequel les données de charge utile sont transmises sous forme d'un ou plusieurs blocs de contrôle de liaison radio, dans lequel les données de charge utile sont entrelacées et réparties sur des créneaux temporels attribués, et la transmission utilise au moins une porteuse pour transmettre les données de charge utile de la première unité à la seconde unité,
- dans lequel la première unité est configurée pour transmettre une demande d'interrogation à un moment donné à la seconde unité, et la demande d'interrogation initialise un examen ack/nack de blocs de contrôle de liaison radio reçus par la seconde unité,
- dans lequel la seconde unité est configurée pour examiner des blocs de contrôle de liaison radio reçus pour chacun des créneaux temporels attribués,
- dans lequel, pendant l'examen, une combinaison binaire de bits est utilisée pour chacun des créneaux temporels attribués pour indiquer si un bloc de contrôle de liaison radio ou deux blocs de contrôle de liaison radio de chacun des créneaux temporels attribués présentent ou non des erreurs,
- dans lequel les combinaisons binaires de bits d'indication sont utilisées pour former une carte de bits,
- dans lequel la seconde unité est configurée pour transmettre la carte de bits de la seconde unité à la première unité sous forme de signal ack/nack,
- dans lequel la première unité est configurée pour analyser la carte de bits et identifie des blocs de contrôle de liaison radio erronés, dans lequel l'analyse est réalisée en utilisant le temps de transmission des blocs de contrôle de liaison radio entre la première et la seconde unité, les créneaux temporels attribués et le moment où la demande d'interrogation a été envoyée.

11. Appareil de signalisation ack/nack,
- dans lequel un bloc de données comprend des données de charge utile, dans lequel les données de charge utile sont transmises d'une première unité sous forme d'un ou plusieurs blocs de contrôle de liaison radio, dans lequel les données de charge utile sont entrelacées et réparties sur des créneaux temporels attribués, et l'appareil utilise au moins une porteuse pour recevoir les données de charge utile à partir de la première unité,
- dans lequel l'appareil est configuré pour recevoir, à partir de la première unité, une demande d'interrogation à un moment donné, et la demande d'interrogation initialise un examen ack/nack de blocs de contrôle de liaison radio reçus par l'appareil,
- dans lequel l'appareil est configuré pour examiner des blocs de contrôle de liaison radio reçus pour chacun des créneaux temporels attribués,
- dans lequel, pendant l'examen, une combinaison binaire de bits est utilisée pour chacun des créneaux temporels attribués pour indiquer si un bloc de contrôle de liaison radio ou deux blocs de contrôle de liaison radio de chacun des créneaux temporels attribués présentent ou non des erreurs,
- dans lequel les combinaisons binaires de bits d'indication sont utilisées pour former une carte de bits,
- dans lequel l'appareil est configuré pour transmettre la carte de bits de l'appareil à la première unité sous forme de signal ack/nack,
- dans lequel l'appareil est spécifiquement adapté pour coopérer avec la première unité,
- dans lequel la première unité est configurée pour analyser la carte de bits et identifie des blocs de contrôle de liaison radio erronés, dans lequel l'analyse est réalisée en utilisant le temps de transmission des blocs de contrôle de liaison radio entre la première unité et l'appareil, les créneaux temporels attribués et le moment où la demande d'interrogation été envoyée.
